(19) **Europäisches Patentamt**

**European Patent Office**

**Office européen des brevets**

(11) Publication number: **0 367 562 B1**

(12) **EUROPEAN PATENT SPECIFICATION**

(45) Date of publication of patent specification: **03.05.95**

(51) Int. Cl.⁶: **C08L 83/07**, C08K 3/08, C08K 9/02

(21) Application number: **89311237.5**

(22) Date of filing: **31.10.89**

(54) **Electrically conductive silicone compositions.**

(30) Priority: **04.11.88 US 267412**

(43) Date of publication of application:
**09.05.90 Bulletin 90/19**

(45) Publication of the grant of the patent:
**03.05.95 Bulletin 95/18**

(84) Designated Contracting States:
**BE DE FR GB**

(56) References cited:
**EP-A- 0 173 560**
**EP-A- 0 264 635**
**US-A- 4 777 205**

**PATENT ABSTRACTS OF JAPAN, vol. 7, no. 122 (C-168)[1267], 26th May 1983;& JP-A-58 40 375**

(73) Proprietor: **DOW CORNING CORPORATION**
**3901 S. Saginaw Road**
**Midland**
**Michigan 48686-0994 (US)**

(72) Inventor: **Cole, Richard Leroy**
**106 West Murphy**
**Bay City**
**Michigan 48706 (US)**
Inventor: **Lutz, Michael Andrew**
**1815 Wyllys Street**
**Midland**
**Michigan 48640 (US)**

(74) Representative: **Laredo, Jack Joseph et al**
**Elkington and Fife**
**Prospect House**
**8 Pembroke Road**
**Sevenoaks, Kent TN13 1XR (GB)**

# EP 0 367 562 B1

**Description**

A silicone composition which is electrically conductive due to the presence of silver particles or particles whose outer surface is silver, can be increased in electrical conductivity through the use of a silicone polymer which includes certain critical amounts of aromatic containing radicals such as phenyl radicals, and hydrocarbon radicals containing at least one non-aromatic double or triple bond between adjacent carbon atoms, in particular, ethylenically unsaturated hydrocarbon radicals such as vinyl radicals, the vinyl radicals being in addition to the vinyl radicals commonly used as endblockers in polydiorganosiloxane polymers which are cured through an addition reaction with an organohydrogensiloxy containing compound in presence of a platinum catalyst.

The preparation of silicone compositions which are electrically conductive through the introduction of carbon particles or metallic particles has been known.

EP-A-0273003 (Dr. Christian Prud'Homme assignor to CIBA-GEIGY AG) described potentially adhesive electrically conductive compositions and films formed therefrom which are employed in particular for the adhesive bonding of the surfaces of electronic devices. These compositions comprise a thermoplastic polyblock organopolysiloxane copolymer with elastomeric properties and particles whose surface at least is electrically conductive and, optionally, a solvent or diluent. These copolymers which comprise both alkylene radicals and aromatic radicals in addition to alkyl or haloalkyl radicals may be prepared by polyaddition in the presence of a suitable catalyst between diethylenic silicon compound units and a dihydrogenated silicon compound followed by a reaction, in a second stage, in the presence of a suitable catalyst, with at least one unit of an $\alpha$, $\omega$-dihydropolydiorganosiloxane or at least one unit of an $\alpha$, $\omega$-diethylenic polydiorganosiloxane. The resulting thermoplastic elastomer is combined with an electrically conductive material or a material at least the surface of which is electrically conductive, silver being preferred. The potentially adhesive electrically conductive compositions obtained are characterised in that they are capable of being shaped without recourse to chemical reactions such as cross-linking, addition and condensation.

US-A-4777205 (Matthew A. La Scola et al assignor to Wacker Silicones Corporation) describes an electrically conductive organopolysiloxane composition containing (1) an organopolysiloxane capable of being crosslinked, (2) a crosslinking agent capable of reacting with the organopolysiloxane, (3) from 120 to 200 parts by weight of silver coated mica particles per 100 parts by weight of organopolysiloxane (1), in which the silver coated mica particles contain from 50 to 80 percent by weight of silver based on the weight of the mica, and (4) sufficient carbon black to stabilize the composition. The radicals making up the crosslinkable diorganopolysiloxanes used include monovalent hydrocarbon radicals having aliphatic unsaturation such as vinyl- and allyl-containing radicals, and aromatic radicals such as the phenyl radical. The composition may be crosslinked by the addition of silicon-bonded hydrogen to aliphatically unsaturated carbon-to-carbon groups in the presence of a conventional platinum catalyst. Methyl-phenylpolysiloxanes are mentioned amongst the examples of diorganosiloxane units making up the organopolysiloxane. The inventors (of La Scola et al USP 4777205) discovered that the compositions containing the silver coated mica particles of their invention had a tendency to separate into two phases, an oily phase and a solid phase, being then no longer thixotropic, so that it was necessary to stabilise the compositions by the addition of electrically conductive carbon black and, optionally, graphite. The amount of carbon black used was generally from 1 to 8 parts by weight, preferably 2 to 6 parts by weight, per 100 parts of the diorganopolysiloxane component (1).

It has now been discovered that the electrical conductivity of silicone compositions, which are electrically conductive due to the presence of silver particles or particles whose outer surface is silver, can be increased or the electrical resistivity decreased, by the proper selection of the silicone polymer which is used. By increasing the unsaturated hydrocarbon content, in particular, the ethylenically unsaturated hydrocarbon content, and the aromatic content of the silicone polymer, the electrical conductivity is increased. A preferred method increases the phenyl radical content and the vinyl radical content. Additionally, the electrical conductivity is retained to a higher degree upon thermal aging.

According to one aspect of the invention, there is provided an electrically conductive curable silicone composition having an electrical resistivity of less than $1 \times 10^{-2}$ ohm-cm, said electrical resistivity being stable to thermal aging, and said composition comprising:-

(i) a silicone polymer (A) having more than 5 percent of its silicon atoms with aromatic-containing radicals attached thereto or with ethylenically unsaturated (double or triple bond) hydrocarbon radicals attached thereto, or with both aromatic-containing and ethylenically unsaturated (double or triple bonds) hydrocarbon radicals attached thereto, and said silicone polymer (A) is curable through an addition reaction with a silicon hydride in the presence of a platinum catalyst;

2

(ii) conductive particles (B) consist of from 12.5 to 50 volume percent, based on said composition, of silver particles or of particles having an outer surface of silver; and

(iii) optionally carbon black (C).

According to another aspect of the invention, there is provided a method of improving the electrical conductivity of a silicone composition comprising (A) a silicone polymer and (B) conductive particles, said method being characterised by using as said silicone polymer (A) a silicone polymer which (a) has more than 5 percent of its silicon atoms with an aromatic-containing radicals attached thereto, or with ethylenically unsaturated (double or triple bonds) hydrocarbon radicals attached thereto, or with both aromatic-containing and ethylenically unsaturated (double or triple bonds) hydrocarbon radicals attached thereto, and (b) is curable through an addition reaction with a silicon hydride in the presence of a platinum catalyst; and as conductive particles (B) from 12.5 to 50 volume percent, based on said composition, of silver particles or of particles having an outer surface of silver; and, optionally, additionally using carbon black in said silicone composition.

The silicone polymer (A) preferably has more than 5 percent of its silicon atoms with phenyl radicals attached thereto, or with vinyl radicals attached thereto, or with both phenyl and vinyl radicals attached thereto, the silicone polymer (A) being curable through an addition reaction with a silicon hydride in the presence of a platinum catalyst.

The silicone polymer of this invention is a material which is curable to a crosslinked state to give a resinous material or an elastomeric material. Since one of the uses of electrically conductive silicone compositions is as a bonding agent for adhering integrated circuit chips to a substrate, a preferred polymer is one which cures to an elastomer, thereby providing stress relief to the composite when the composite is cycled through a temperature range. The only requirement for the curable silicone polymer is that it be curable by an addition reaction with silicon hydride in the presence of a platinum catalyst, and contain the required amount of aromatic and unsaturated hydrocarbon (e.g., vinyl) groups, so that the improved electrical conductivity results in the silver containing composition.

A preferred silicone polymer which can be cured to an elastomer has the generic formula:

$(Me_2 ViSiO_{1/2})_{0.42}(Me_2 SiO)_{103}(MePhSiO)_{45}$, where Ph is phenyl. The method of preparation of polydiorganosiloxanes is well known. For example, one method consists of the equilibration of the appropriate octoorganotetracyclosiloxanes and hexaorganodisiloxane endblocker in the presence of a potassium catalyst, neutralization and stripping under vacuum to give the polymer.

If the polymers chosen for use in the compositions of this invention are of a fluid viscosity, compositions can be prepared which are of a low enough viscosity that they can be easily applied without using any solvent as a diluent. It is preferred that no solvent be used in the this invention. When the composition is to be used as a curable adhesive, for example, it is possible to make an easily spreadable material which cures without the release of any volatile materials. It is thus very useful for adhering two non porous surfaces together.

The compositions of this invention are electrically conductive due to the presence in the composition of from 12.5 to 50 volume percent, based on the composition, of silver particles or particles having an outer surface of silver. There are many types of particles available commercially which can provide electrical conductivity. It is recognized that a majority of the electrical conductivity of particles is available as long as the surface is very conductive, such as when the surface is silver. In the interest of economy, there are available particles such as copper, solid glass, hollow glass, mica flakes, nickel granules and spheres, short glass and ceramic fibers, having average particle diameters in the range of from 15 to 100 micrometers, which are coated with a layer of silver. There are also available particles of silver in the form of powders having average particle diameters in the range of from 0.5 to 20 micrometers and particles which have been flattened into flakes of the same sizes. Silver is the conductive metal of choice because it resists oxidation, even in small particle sizes and provides the required degree of electrical conductivity. Metals which oxidize, such as copper, do not give useful levels of conductivity after the surface of the particles oxidizes. Since the compositions of this invention are intended to be highly conductive, the preferred particles having an outer surface of silver are solid silver particles, most preferably in the form of flakes. The preferred amount of silver flakes is from 20 to 25 volume percent. Below this value, the conductivity is lower than desired. Above this value, the viscosity increases considerably and the additional conductivity is obtained at a great increase in cost.

Silver powders are ordinarily produced by chemical precipitation, electrolytic deposition or cementation. The powder produced can be characterized by the average particle diameter, apparent density and tap density. The powders are of very high purity with a clean surface. When flakes are produced, the powder is mixed with a solvent and a lubricant, and then fed into a grinding or milling device to form the powder into a thin flake. The lubricant is added to prevent the silver powder from cold welding or forming large agglomerates. After milling, the solvent and lubricant are washed off and the flake is dried. A portion of the milling agent remains chemisorbed on the silver surface.

Liquid organosiloxane compositions that cure to form elastomeric materials by a platinum-catalyzed hydrosilation reaction typically include at least one diorganopolysiloxane containing two or more vinyl or other unsaturated hydrocarbon radicals per molecule, an organohydrogensiloxane and a platinum catalyst.

As used in this specification, the term "unsaturated hydrocarbon radical" encompasses hydrocarbon radicals containing at least one non-aromatic double or triple bond between adjacent carbon atoms.

The curing agent is an organohydrogensiloxane containing an average of two or more silicon bonded hydrogen atoms per molecule. This ingredient contains from as few as four silicon atoms per molecule up to an average of 20 or more and can have a viscosity of up to 10 Pa•s or higher at 25°C. The repeating units of the organohydrogensiloxane include but are not limited to $HSiO_{1.5}$, $R^4HSiO$ and/or $R^4{}_2HSiO_{0.5}$ in addition to one or more of monoorganosiloxy, diorganosiloxane, triorganosiloxy and $SiO_{4/2}$ units. In these formulae, $R^4$ represents a monovalent hydrocarbon or halohydrocarbon radical, preferably of 6 carbon atoms or less, with the proviso that $R^4$ cannot represent an ethylenically unsaturated hydrocarbon radical.

Alternatively, the organohydrogensiloxane can be a cyclic compound containing diorganosiloxane and organohydrogensiloxane units or a compound of the formula $Si(OSiR^4{}_2H)_4$. The preferred curing agent is a linear trimethylsiloxy terminated dimethylsiloxane/methylhydrogensiloxane copolymer containing an average of from 10 to about 50 repeating units per molecule, of which from 3 to 5 are methylhydrogensiloxane or a compound of the formula $Si(OSiR^4{}_2H)_4$ where $R^4$ is lower alkyl, most preferably methyl.

The molar ratio of silicon bonded hydrogen atoms to vinyl or other unsaturated hydrocarbon radicals in compositions curable by a hydrosilylation reaction is critical with respect to the properties of the cured elastomer. The optimum ratio for the present curable compositions will be determined at least in part by the molecular weight of ingredient (A). This optimum value can readily be determined by those skilled in the art with a minimum of experimentation and is not part of this invention.

Hydrosilylation reactions are typically conducted in the presence of a catalyst that is a platinum group metal or a compound of such a metal. Platinum compounds such as hexachloroplatinic acid and particularly complexes of these compounds with relatively low molecular weight vinyl-containing organosiloxane compounds are preferred catalysts because of their high activity and compatibility with the organosiloxane reactants. These complexes are described in U.S. Patent No. 3,419,593 that issued to David N. Willing on December 31, 1968. Complexes with low molecular weight organosiloxanes wherein the silicon-bonded hydrocarbon radicals are vinyl and either methyl or 3,3,3-trifluoropropyl are particularly preferred because of their ability to catalyze a rapid curing of the elastomer at temperatures of at least about 70°C.

The platinum containing catalyst can be present in an amount equivalent to as little as one part by weight of platinum per one million parts of curable composition. Catalyst concentrations equivalent to from 5 to 200 parts of platinum per million of curable composition are preferred to achieve a practical curing rate. Higher concentrations of platinum provide only marginal improvements in curing rate and are, therefore, economically unattractive, particularly when the preferred catalysts are used.

Mixtures of the aforementioned vinyl-containing reactants, curing agents and platinum-containing catalysts may begin to cure at ambient temperature. To obtain a longer working time or "pot life", the activity of the catalyst under ambient conditions can be retarded or suppressed by addition of a suitable inhibitor.

Known platinum catalyst inhibitors include the acetylenic compounds disclosed in U.S. Patent No. 3,445,420, which issued on May 20, 1969 to Kookootsedes et al. Acetylenic alcohols such as 2-methyl-3-butyn-2-ol constitute a preferred class of inhibitors that will suppress the activity of a platinum-containing catalyst at 25°C. Compositions containing these catalysts typically require heating at temperatures of 70°C. or above to cure at a practical rate.

If it is desired to increase the pot life of a curable composition under ambient conditions, this can be accomplished using an olefinically substituted siloxane of the type described in U.S. Patent No. 3,989,667, which issued on November 2, 1976 to Lee and Marko. Cyclic methylvinylsiloxanes are preferred.

Inhibitor concentrations as low as one mole of inhibitor per mole of platinum will in some instances impart satisfactory working time while not adversely affecting cure rate.In other instances, inhibitor concentrations of up to 500 or more moles of inhibitor per mole of platinum are required . The optimum concentration for a given inhibitor in a given composition can readily be determined by routine experimentation and does not constitute part of this invention.

Small amounts of additives can be included in the composition for modifying the color and physical properties of the composition. Typical additives include but are not limited to pigments, dyes, adhesion promoters, flame retardants, heat and/or ultraviolet light stabilizers and resinous organosiloxane copolymers to enhance the physical properties of the cured elastomer. Filler such as fumed silica can be added to improve the physical strength of the composition when cured. The effect of added materials must always be evaluated to make sure that the electrical conductivity of the composition is not effected adversely.

Suitable methods of mixing the compositions of this invention are well known to those experienced in the art. A preferred process weighs the polymer into a container, then weighs and mixes in the remaining liquid ingredients. The silver particles are then stirred and mixed into the composition until a uniform composition results. The mixing can be simple, such as stirring with a spatula or paddle, or it can involve the use of a mixer, such as a Baker-Perkins mixer, a Ross mixer or a three roll mill. When the silicone composition is of the type in which the components are stored as two parts, each part is made as above, then mixed together before use.

To facilitate measuring and blending quantities of two-part compositions that constitute a preferred embodiment of this invention, both of these parts preferably include a portion of the total amount of silicone polymer.

The composition of the invention comprises a silicone copolymer which is cured through the reaction of vinyl groups present in the polymer reacting with hydrogen atoms attached to silicon present in a cross linking agent in the presence of a platinum catalyst. The composition is prepared as a two part system for storage, then is combined at the time of use. The curing reaction does not give off any byproducts, so there is no tendency to develop porosity in the cured composition, nor is there a need for the curing composition to be under pressure during cure. These are characteristics which are desirable in most cases where an electrically conductive composition is being used to adhere two pieces together or where it is used as a coating to give a surface electrical conductivity. The silver particles used in the composition are preferably silver flakes since it takes a lower weight of flakes than of powder to obtain a given level of electrical conductivity. When it is desired to use this system and cure at room temperature, the silver particles or particles having an outer surface of silver must be free of any organic processing aids. Since silver powder is readily available with a clean surface, it is the preferred material for use when cure at room temperature is desired.

The ratio of silicone polymer to silver particles is conveniently measured by weight, but the important ratio is the volume ratio as a critical volume of silver particles must be present to impart electrical conductivity. A conversion can be calculated on the basis of a specific gravity of silver of 10.5 and of silicone polymer of 1.0 as follows:

| Weight percent silver | Volume percent silver |
|---|---|
| 91.3 | 50.0 |
| 90 | 46.2 |
| 85 | 35.1 |
| 80 | 27.6 |
| 75 | 22.2 |
| 70 | 18.2 |
| 65 | 15.0 |
| 60 | 12.5 |

The compositions of this invention will find use as electrically conductive adhesives, coatings, films, sheets, fabricated parts and such. The compositions of this invention which cure to elastomers are particularly suitable for use with large integrated circuits for bonding where electrical conductivity is required and where the stress relief properties of the elastomeric material is desirable.

The following examples are included for illustrative purposes only and should not be construed as limiting the invention which is properly set forth in the appended claims.

Example 1

A series of compositions were prepared using silicone polymers having varying amounts of phenyl radical.

Composition 1 was prepared by stirring together 12.375 gm of silver particles in the form of mechanically flattened flakes having a typical particle size distribution of from 0.5 to 10 micrometers and a weight loss at 538°C (1000°F) of 0.65 percent. (Silflake (trade mark) 282 from Handy and Harman, Fairfield, CT.), 2.295 gm of dimethylvinylsiloxy endblocked polydimethylsiloxane having a degree of polymerization (Dp) of about 150 and 0.33 gm of chloroplatinic acid complex of divinyltetramethyldisiloxane diluted with dimethylvinylsiloxy endblocked polydimethylsiloxane to provide 0.7 weight percent platinum to give a base material. A curing agent was prepared by mixing 3.195 gm of the dimethylvinylsiloxy endblocked polydimethylsiloxane, 1.92 gm of adhesion additive and 4.88 gm of trimethylsiloxy endblocked polydiorganosiloxane having an average of five methylhydrogensiloxane units and three dimethylsiloxane units per molecule with a silicon-bonded hydrogen atom content in the range of about 0.7 to 0.8 weight percent. Ten parts of the base was then mixed with one part of the curing agent to give a curable composition, containing a polymer having no phenyl radicals and having 75 percent by weight (22.2 percent by volume) silver particles. This is a comparative composition.

The curable composition was made into test samples. A test sample for measuring electrical resistivity was prepared by first placing 2 strips of 3M Miracle Scotch Tape (trade mark) down the length of the surface of a glass microscope slide with a spacing of 3.175 mm (0.125 inch) between them. A portion of the test composition was placed at one end of the space and then spread out by drawing a single edge razor blade held at a 45 degree angle over the tape and the sample so that the sample was distributed evenly into the space between the tape strips and equal to the thickness of the tape strips [0.05 mm (0.002 inch)]. The tape was then removed and the sample cured by placing in a forced air oven for 1 hour at 150°C. The electrical resistance was then measured by use of a four pole resistance bridge. A variable DC power supply was used to provide a current through the length of the sample. A digital multimeter was then used to measure the voltage drop between two electrodes on the surface of the sample with a measured length of 18.26 mm (0.719 inch) between them. The volume resistivity was then calculated according to the formula:

$$\text{Volume Resistivity} = \left(\frac{V}{I}\right)\left(\frac{\text{width} \times \text{thickness}}{\text{length}}\right)$$

where V is the voltage and I is the current. Three glass slides were prepared for each test and the voltage measured at 10, 20 and 40 milliamperes. The values were then averaged, with the result shown in Table I. After measuring, the electrical resistance after cure for 1 hour at 150°C., the slides were thermally aged at 200°C. for 4 hours and the electrical resistance measured again, with the result shown in Table I. The samples were aged an additional 21 hours at 200°C. and again tested.

The adhesiveness of the samples was measured by preparing lap shear specimens. Two pieces of Alclad 2024T3 aluminum 25.4 mm by 76.2 mm (1 inch by 3 inches) were cleaned by first wiping with isopropyl alcohol, followed by acetone, dried, then placed in a jig so that they overlapped for 25.4 mm (one inch) of their length, with a portion of the composition to be tested between them so as to bond the two pieces together. The glue line was 0.5 mm (0.020 inch) thick. The jig was then placed in a forced air oven for 2 hours at 150°C. to cure the lap shear specimens. The samples were removed, cooled for a minimum of 4 hours and tested for adhesive strength by pulling them apart in a longitudinal direction. The average load required to obtain failure of the bond is shown in Table 1.

Composition 2 was prepared by first mixing a part A consisting of 10 gm of the silver particles of composition 1, 2.77 g of dimethylvinylsiloxy endblocked diorganosiloxane random copolymer having dimethylsiloxy units and methylphenylsiloxy units in a ratio so that there was 10 mole percent of methylphenylsiloxy units and having a Dp similar to composition 1, 0.53 gm of the platinum containing catalyst of composition 1 and 0.03 gm of 2-methyl-3-butyn-2-ol cure inhibitor.

Part B was prepared by mixing 10 gm of the silver particles, 1.8 gm of the phenyl containing copolymer of part A, 0.47 gm of adhesion promoter and 1.05 gm of the methylhydrogen copolymer of composition 1. Part A and Part B were then combined to give a curable composition having 10 mole percent phenylmethylsiloxy in the polymer and having 75 percent by weight silver particles. The composition was prepared into test samples and tested in the same manner as composition 1.

Composition 3 was prepared and tested in the same manner as composition 2, except the phenyl containing copolymer had 30 mole percent methylphenylsiloxy groups.

Composition 4 was prepared and tested in the same manner as composition 2, except the phenyl containing copolymer had 50 mole percent methylphenylsiloxy groups.

The test results are shown in Table I. The results show that as the amount of phenyl radical was increased, the electrical resistivity decreased and the stability of the electrical resistivity upon heat aging increased.

6

Table I

| Composition | Mole Percent Phenyl | Electrical Resistance, ohm-cm | | | Lap Shear N (pounds) |
|---|---|---|---|---|---|
| | | 1hr/150°C. | 4hr/200°C. | 25hr/200°C. | |
| 1* | 0 | 0.00238 | 0.0043 | 0.0102 | 1.59 (354) |
| 2 | 10 | 0.0007 | 0.00089 | 0.0011 | 0.74 (165) |
| 3 | 30 | 0.00037 | 0.00036 | 0.00038 | 0.64 (143) |
| 4 | 50 | 0.00026 | 0.00025 | 0.00026 | 0.41 (92) |

*comparative composition

Example 2

A series of samples were prepared to determine the effect of using copolymers having increasing vinyl content in addition to containing phenyl radicals.

7

Composition 21 was made in the same manner as composition 1 of Example 1, except the copolymer had a Dp of about 300. This is a comparative composition.

Composition 22 was made in the same manner as composition 4 of Example 1, except the copolymer had a Dp of about 300.

Composition 23 was made in the same manner as composition 22, except the copolymer contained 2 pendant vinyl groups per molecule in addition to the terminal vinyl groups. The vinyl groups replaced methyl groups, so the copolymer was still 50 mole percent methylphenylsiloxy units.

Composition 24 was made in the same manner as composition 23, except 20 percent of the copolymer was replaced with a copolymer containing 50 pendant vinyl groups per molecule in addition to the terminal vinyl groups and it had an average Dp of about 500.

Each composition was prepared into test samples and tested in the same manner as in Example 1, with the results shown in Table II. The results show that as the amount of vinyl radical in the copolymers, containing 50 percent methylphenylsiloxy units, was increased, the electrical resistivity decreased.

## Table II

| Comp'n | Phenyl Units | Vinyl Units | Electrical 1hr/150°C. | Resistance, 4hr/200°C. | ohm-cm 25hr/200°C. |
|---|---|---|---|---|---|
| 21* | 0 | 0 | 0.0035 | 0.0058 | 0.010 |
| 22 | 50 | 0 | 0.00028 | 0.00022 | 0.00023 |
| 23 | 50 | 0.67 | 0.00021 | 0.00020 | 0.00020 |
| 24 | 50 | 2.5 | 0.00014 | 0.00014 | 0.00013 |

Phenyl units are the mole percent methylphenylsiloxy vinyl units are the mole percent methylvinylsiloxy units in addition to the endblocker of dimethylvinylsiloxy units.

* Comparative

### Example 3

A series of samples were prepared which illustrate the ability of additional vinyl content to lower the electrical resistivity.

Composition 31 was prepared by mixing a part A of 10 gm of the silver particles of Example 1, 1.39 gm of dimethylvinylsiloxy endblocked polydimethylsiloxane having a Dp of about 500 and 1.39 gm of dimethylvinylsiloxy endblocked polydimethylsiloxane having a Dp of about 300 to give an average of about 400, 0.53 gm of the platinum catalyst of composition 1 of Example 1 and 0.03 gm of the cure inhibitor of composition 2 of Example 1. Part B was prepared by mixing 10 gm of the silver particles, 0.96 gm of each of the polymers of part A, 0.95 gm of the methylhydrogen copolymer of composition 1 and 0.46 gm of the adhesion additive of composition 1. Part A and part B were combined into a curable composition and test samples were prepared and tested as in Example 1 with the results shown in Table III.

Composition 32 was prepared by mixing a base of 12.375 gm of the silver particles of Example 1, 2.295 gm of the polydimethylsiloxane having a Dp of about 300 of composition 31 of Example 3 and 0.33 gm of the platinum catalyst of composition 1 of Example 1. A curing agent was prepared by mixing 3.575 gm of the polymer used in the base, 4.5 gm of the methylhydrogen copolymer of composition 1 and 1.92 gm of adhesion additive of Example 1. A curable composition was then prepared by mixing 10 parts of the base with 1 part of the curing agent.

Composition 33 was prepared in the same manner as composition 32, except the polymer was one in which the Dp was about 150.

Composition 34 was prepared by mixing a part A of 10 gm of the silver particles of Example 1, 2.77 gm of dimethylvinylsiloxy endblocked polydimethylsiloxane having about 7 dimethylsiloxane units per molecule, 0.53 gm of the platinum catalyst of composition 1 and 0.03 gm of the cure inhibitor of composition 2. Part B was prepared by mixing 10 gm of the silver particles, 1.05 gm of the polymer of part A, 1.81 gm of the methylhydrogen copolymer of composition 1 and 0.46 gm of adhesion additive of composition 1. Part A and part B were combined by mixing 1 part of A with 1 part of B by weight.

The results in Table III show that as the length of the dimethylvinylsiloxy endblocked polydimethylsiloxane is decreased, thereby increasing the vinyl content, the electrical resistivity of the cured composition is lowered and the stability of the electrical resistivity upon heat aging is improved.

## Table III

| Comp'n | Polymer Dp | Mole Percent Vinyl | Electrical 1hr/150°C. | Resistance, 4hr/200°C. | ohm-cm 25hr/200°C. |
|---|---|---|---|---|---|
| 31* | 400 | 0.5 | 0.0070 | 0.126 | 14.2 |
| 32* | 300 | 0.67 | 0.0035 | 0.0058 | 0.01 |
| 33* | 150 | 1.33 | 0.0024 | 0.0043 | 0.01 |
| 34 | 7 | 22.2 | 0.00052 | 0.0006 | 0.0006 |

* Comparative

### Example 4

A series of compositions were prepared using a silicone polymer having 30 mole percent methylphenylsiloxy units.

Composition 41 was prepared by stirring together 7.5 gm of the silver particles of Example 1, 2.08 gm of the copolymer of composition 3, 0.40 gm of the platinum catalyst of composition 1 and 0.02 gm of the

11

EP 0 367 562 B1

cure inhibitor of composition 2 to give part A. Part B was prepared by mixing 7.5 gm of the silver particles, 9.98 gm of the copolymer, 0.50 gm of adhesion additive of composition 1 and 1.0 gm of the methylhydrogen copolymer of composition 1. Then part A and part B were mixed together to give a curable composition having a polymer comprising 30 mole percent methylphenylsiloxy units and 75 percent by weight silver flakes.

Composition 42 was prepared from the same ingredients as composition 41, but adding fumed silica. A mix was first made of 92.76 parts of the copolymer and 7.24 parts of fumed silica having a surface area of about 250 m$^2$/gm. Part A was then prepared by mixing 7.38 gm of the silver flake, 1.7 gm of the copolymer/silica mix, 0.4 gm of the platinum catalyst, 0.02 gm of the cure inhibitor of composition 2 and 0.5 gm of adhesion additive of composition 1. Part B was prepared by mixing 7.38 gm of the silver particles, 1.62 gm of the copolymer/silica mix and 1.0 gm of the methylhydrogen copolymer of composition 1. Then parts A and B were mixed together to give a curable composition having 73.8 percent by weight silver flake, 1.2 percent by weight fumed silica and 15.4 percent by weight copolymer.

Composition 43 was prepared using both silver flakes and silver powder, in conjunction with the ingredients of composition 41. Part A was prepared by mixing 138 gm of the silver flakes of composition 1, 42 gm of silver powder having an average particle diameter of from 0.5 to 0.8 micrometers (Silpowder 331 from Handy and Harman, Fairfield, CT.), 49.92 gm of the copolymer, 9.6 gm of the platinum catalyst and 0.48 gm of the cure inhibitor of composition 2. Part B was prepared by mixing 84 gm of the silver flakes, 96 gm of the silver powder, 23.95 gm of the copolymer, 12 gm of adhesion additive of composition 1 of Example 1 and 24.05 gm of the methylhydrogen copolymer of composition 1 of Example 1. Then parts A and B were mixed together in a 1 to 1 weight ratio to give a curable composition having 46.25 percent by weight silver flake, 28.75 percent by weight silver powder and 15.4 percent by weight polymer.

Composition 44 was composition 43 tested after 8 weeks aging at room temperature, then preparing the test sample.

Each composition was prepared into test samples and tested in the same manner as in Example 1, with the results shown in Table IV.

The results demonstrate the use of silica as a thixotropic agent and the ability to use silver powder to obtain highly conductive materials.

Table IV

| Comp'n | Electrical 1hr/150°C. | Resistance, 4hr/200°C. | ohm-cm 25hr/200°C. |
|---|---|---|---|
| 41 | 0.00029 | 0.00029 | 0.00033 |
| 42 | 0.00031 | 0.00031 | 0.00033 |
| 43 | 0.00036 | 0.00035 | 0.00042 |
| 44 | 0.00045 | 0.00050 | 0.00057 |

Example 5

A polymer was prepared having 50 mole percent methylphenylsiloxy radical to compare with the polymer used in example 4 having 30 mole percent of this radical.

A copolymer was prepared by adding 33.57 gm of dimethylvinyl endblocked polydimethylsiloxane having about 7 dimethylsiloxy units, 500.93 gm of dimethylcyclosiloxane fluid and 965.5 gm of methylphenylcyclosiloxane to a 3-necked flask equipped with a stirrer, thermometer, condenser and nitrogen purge. Then 3.54 gm of potassium silanolate and 7.5 gm of dimethylformamide were added and a slow nitrogen purge was used to eliminate moisture in the system. The stirrer was started and the mixture heated to 150°C. for a period of 16 hours to cause polymerization and equilibration of the mixture. The mixture was then cooled to 80°C. and 0.21 gm of propionic acid was added and the mixture stirred for 2 hours to neutralize. Then 0.24 gm of sodium bicarbonate and 15 gm of Supercell diatomaceous earth were added with stirring and the mixture allowed to cool to room temperature. The mixture was then filtered through a 0.8 micrometer membrane and vacuum stripped to 190°C. at a pressure of 1.333 kPa (10 mm of mercury). There was very little material which was volatile under these conditions. The polymer was cooled to less than 80°C. while under vacuum. The copolymer had a viscosity of about 8.050 Pas (8050 centipoise) and a calculated vinyl content of about 0.17 weight percent.

Composition 51 was prepared by mixing a part A of 5.75 gm of silver flake of Example 1, 1.75 gm of silver powder of composition 43, 2.08 gm of the above copolymer, 0.4 gm of the platinum catalyst of composition 1 and 0.02 gm of the cure inhibitor of composition 2. Part B was prepared by mixing 3.5 gm of the silver flake, 4.0 gm of the silver powder, 1.08 gm of the copolymer, 0.5 gm of the adhesion additive of composition 1 and 0.92 gm of the methylhydrogen copolymer of composition 1. Parts A and B were combined at a 1 to 1 ratio by weight to give a curable composition of the same composition as composition 43, except the copolymer had 50 mole percent methylphenylsiloxy units rather than 30 mole percent.

For composition 52, composition 51 was repeated, except all of the silver was in the form of the silver flake of Example 1.

Each composition was prepared into test samples and tested in the same manner as in Example 1, with the results shown in Table V.

Table V

| Comp'n | Electrical 1hr/150°C. | Resistance, 4hr/200°C. | ohm-cm 25hr/200°C. |
|--------|-----------------------|------------------------|---------------------|
| 51     | 0.00044               | 0.00043                | 0.00046             |
| 52     | 0.00028               | 0.00022                | 0.00023             |

Example 6

A composition was prepared having a lower silver particle content, the silver being in the form of flake.

Composition 61 was prepared using the same ingredients as in composition 4, Example 1, mixing for part A 6.5 gm of silver flake, 3.08 gm of the copolymer having 50 mole percent methylphenylsiloxy units, 0.4 gm of the platinum catalyst and 0.02 gm of the cure inhibitor of composition 2, Example 1. Part B was prepared by mixing 6.5 gm of silver flake, 1.94 gm of the copolymer, 0.5 gm of adhesion additive and 1.06 gm of the methylhydrogen copolymer. Parts A and B were then mixed at a 1 to 1 weight ratio to make the curable composition having 65 weight percent (15.0 volume percent) silver flake.

The composition was prepared into test samples and tested in the same manner as in Example 1, with the results shown in Table VI. Also shown is the result of composition 4, Example 1, a similar composition having 75 weight percent silver flake.

Table VI

| Comp'n | Silver Flake weight percent | Electrical 1hr/150°C. | Resistance, 4hr/200°C. | ohm-cm 25hr/200°C. |
|---|---|---|---|---|
| 61 | 65 | 0.00070 | 0.00065 | 0.00070 |
| 4 | 75 | 0.00026 | 0.00025 | 0.00026 |

Example 7

A series of compositions were prepared containing 75 weight percent of the silver flake in which the vinyl content of the polymer was varied.

Composition 71 was prepared by first preparing a part A by mixing 10 gm of the silver flake of Example 1, 2.77 gm of dimethylvinylsiloxy endblocked polydimethylsiloxane having about 7 dimethylsiloxy units per molecule, 0.53 gm of the platinum catalyst and 0.03 gm of the cure inhibitor of composition 2. Part B was prepared by mixing 10 gm of the silver powder, 1.05 gm of the polymer of A, 0.46 gm of the adhesion additive of composition 1 and 1.81 gm of the methylhydrogen copolymer of composition 1. Parts A and B were then mixed in a 1 to 1 weight ratio to make the curable composition having 75 weight percent silver flake and 22.2 mole percent vinyl radical.

Composition 72 was prepared by first preparing a part A by mixing 10 gm of the silver flake of Example 1, 2.77 gm of polymer having $ViMe_2SiO_{1/2}$ and $SiO_2$ units, where Vi is vinyl radical, Me is methyl radical and Si is silicon, in a ratio which gives 20.6 weight percent vinyl radicals (66.6 percent of the silicon atoms have vinyl attached), 0.53 gm of the platinum catalyst of composition 1 and 0.03 gm of the cure inhibitor of composition 2. Part B was prepared by mixing 10 gm of the silver flake, 0.18 gm of the polymer, 0.47 gm of the adhesion additive of composition 1 and 2.68 gm of the methylhydrogen crosslinker of composition 1. Parts A and B were then mixed at a 1 to 1 weight ratio to make a curable composition having 75 weight percent silver flake, 20.6 weight percent vinyl radical and a ratio of hydrogen on silicon to vinyl on silicon of 0.8 to 1.

Composition 73 was prepared by first preparing a part A by mixing 10 gm of the silver flake of Example 1, 2.77 gm of polymer having the generic formula

$(Me_2ViSiO_{1/2})_{0.42}(Me_3SiO_{1/2})_{1.38}(SiO_2)_{1.0}$ which gives a vinyl content of 5.8 weight percent, with 49.3 percent of the silicon atoms having vinyl attached, 0.53 gm of platinum catalyst of composition 1 and 0.03 gm of the cure inhibitor of composition 2. Part B was prepared by mixing 10 gm of the silver flake, 1.88 gm of the polymer, 0.47 gm of adhesion additive of composition 1 of Example 1 and 0.99 gm of the methylhydrogen crosslinker of composition 1 of Example 1. Parts A and B were then mixed in a 1 to 1 weight ratio to make a curable composition having 75 weight percent silver flake, 49.3 mole percent vinyl radical and a ratio of hydrogen on silicon to vinyl on silicon of 0.6 to 1.

Composition 74 was prepared by first mixing a part A identical to that of composition 73. Part B was prepared by mixing 10 gm of the silver flake of Example 1, 1.60 gm of the polymer, 0.47 gm of the adhesion additive of composition 1 of Example 1 and 1.26 gm of the methylhydrogen crosslinker of composition 1 of Example 1. Parts A and B were then mixed to make the curable composition having 75 weight percent silver flake, 49.3 mole percent vinyl radical and a ratio of hydrogen on silicon to vinyl on silicon of 0.8 to 1.

Composition 75 was prepared by first mixing a part A identical to that of composition 73. Part B was prepared by mixing 10 gm of the silver flake of Example 1, 1.35 gm of the polymer, 0.47 gm of the adhesion additive of composition 1 of Example 1 and 1.51 gm of the methylhydrogen crosslinker of composition 1 of Example 1. Parts A and B were then mixed in a 1 to 1 weight ratio to make the curable composition having 75 weight percent silver flake, 49.3 mole percent vinyl radical and a ratio of hydrogen on silicon to vinyl on silicon of 1 to 1.

Each composition was prepared into test samples and tested in the same manner as in Example 1, with the results shown in Table VII.

## Table VII

| Comp'n | Mole Percent Vinyl | $\frac{SiH}{SiVi}$ | Electrical Resistance, ohm-cm | | | Lap Shear kN (pounds) |
| --- | --- | --- | --- | --- | --- | --- |
| | | | 1hr/150°C. | 4hr/200°C. | 25hr/200°C. | |
| 71 | 22.2 | 1/1 | 0.0005 | 0.0006 | 0.0006 | 0.51 (113) |
| 72 | 66.6 | 0.8/1 | 0.00041 | -.-* | -.-* | 0.68 (150) |
| 73 | 49.3 | 0.6/1 | 0.00018 | 0.00013 | 0.00018 | 0.37 (83) |
| 74 | 49.3 | 0.8/1 | 0.00025 | 0.00019 | 0.00018 | 0.60 (134) |
| 75 | 49.3 | 1/1 | 0.00035 | 0.00026 | 0.00029 | 1.08 (241) |

* sample cracked

Example 8

A series of compositions were prepared which were cured at room temperature. Part A was prepared by mixing 10 gm of the silver flake of composition 1 of Example 1, 1.405 gm of the polymer of composition 21 of Example 2, 1.405 gm of the polymer of composition 31 of Example 3 and 0.53 gm of the platinum catalyst of composition 1 of Example 1. Part B was prepared by mixing 10 gm of the silver flake, 1.29 gm of each polymer, 0.44 gm of the methylhydrogensiloxane containing polydiorganosiloxane of composition 1 of Example 1 and 0.2 gm of methylvinylcyclosiloxane. Parts A and B were then mixed in a 1 to 1 weight ratio to give a mixture, composition 81, having about 1.17 moles of SiH per mole of vinyl radical and 75 weight percent silver flake. These were cured on microsize slides as usual. The mixture was then allowed to cure into a disk, allowing 16 hours at room temperature. There was no conductivity present when tested as in the above samples.

Composition 82 was prepared in the same manner as for composition 81, except the silver powder of composition 43 of Example 4 was used in place of silver flake. The silver powder has a clean surface with no organic residue present such as is found on the surface of the silver flake. After the room temperature cure, the volume resistivity was about 0.0017 ohm-cm.

Composition 83 was prepared by mixing 10 gm of the silver flake of composition 81, 2.81 gm of the copolymer of composition 3 of Example 1, having 30 mole percent methylphenylsiloxy groups and 0.53 gm of the platinum catalyst of composition 81 to give part A. Part B was prepared by mixing 10 gm of the silver flake, 2.58 gm of the copolymer, 0.56 gm of the methylhydrogensiloxy containing polydiorganosiloxane and 0.2 gm of methylvinylcyclosiloxane. Parts A and B were stirred together and allowed to cure as in composition 81. There was no electrical conductivity when measured.

Composition 84 was prepared in the same manner as in composition 83, except the silver powder of composition 82 was used in place of the silver flake. After curing, the volume resistivity was about 0.0015 ohm-cm.

Each sample was heat aged for 25 hours at 200°C. and retested for conductivity. Compositions 81 and 83 were still not conductive, while composition 82 had a volume resistivity of about 28.6 ohm-cm and composition 84 had a volume resistivity of about 0.022 ohm-cm. This example shows that it is necessary to use a silver particle having a clean surface in order to obtain electrical conductivity when curing at room temperature. This example also shows that a phenyl containing polymer gives a lower conductivity and better retention of electrical conductivity upon heat aging than does a methyl containing polymer.

**Claims**

1. An electrically conductive curable silicone composition having an electrical resistivity of less than 1 x $10^{-2}$ ohm-cm, said electrical resistivity being stable to thermal aging, and said composition comprising:-

    (i) a silicone polymer (A) having more than 5 percent of its silicon atoms with aromatic-containing radicals attached thereto or with ethylenically unsaturated (double or triple bond) hydrocarbon radicals attached thereto, or with both aromatic-containing and ethylenically unsaturated (double or triple bonds) hydrocarbon radicals attached thereto, said silicone polymer (A) being curable through an addition reaction with a silicon hydride in the presence of a platinum catalyst; and

    (ii) conductive particles (B) consisting of from 12.5 to 50 volume percent, based on said composition, of silver particles or of particles having an outer surface of silver; and

    (iii) optionally carbon black (C).

2. A silicone composition according to claim 1 in which said silicone polymer (A) has more than 5 percent of its silicon atoms to which phenyl radicals are attached, or has more than 5 mole percent of its silicon atoms to which vinyl radicals are attached, or has more than 5 mole percent of its silicon atoms to which both phenyl and vinyl radicals are attached, said polymer (A) being curable through an addition reaction with a silicon hydride in the presence of a platinum catalyst.

3. A silicone composition according to Claim 1 or 2, which is free of carbon black.

4. A silicone composition according to any of Claims 1-3, in which said silicone polymer (A) is a polydiorganosiloxane, and there is also present a cure system (C) for said polydiorganosiloxane (A) comprising an organohydrogensiloxane (E) having at least 2 SiH-containing units per molecule, and a platinum-containing catalyst (F), said composition being curable at room temperature.

5. A silicone composition according to any of Claims 1-4, in which there is also present an adhesion additive (D).

6. A silicone composition according to any of Claims 1-5, wherein said silicone polymer has the generic formula: $(Me_2ViSiO_{1/2})_{0.42}(Me_2SiO)_{103}(MePhSiO)_{45}$, where Ph is phenyl, Vi is vinyl and Me is methyl.

7. A method of improving the electrical conductivity of a silicone composition comprising (A) a silicone polymer and (B) conductive particles, said method being characterised by using as said silicone polymer (A) a silicone polymer which (a) has more than 5 percent of its silicon atoms with an aromatic-containing radicals attached thereto, or with ethylenically unsaturated (double or triple bonds) hydrocarbon radicals attached thereto, or with both aromatic-containing and ethylenically unsaturated (double or triple bonds) hydrocarbon radicals attached thereto, and (b) is curable through an addition reaction with a silicon hydride in the presence of a platinum catalyst; and as conductive particles (B) from 12.5 to 50 volume percent, based on said composition, of silver particles or of particles having an outer surface of silver; and, optionally, additionally using carbon black in said silicone composition.

**Patentansprüche**

1. Elektrisch leitfähige vernetzbare Silicongemische mit einem elektrischen spezifischen Widerstand von weniger als $1 \times 10^{-2}$ ohm-cm, der gegen thermische Alterung stabil ist, enthaltend:
   (i) ein Siliconpolymeres (A), in dem mehr als 5 Prozent seiner Siliciumatome eine aromatische Struktur enthaltende Reste oder ethylenisch ungesättigte (Doppel- oder Dreifachbindungen enthaltende) Kohlenwasserstoffreste oder sowohl eine aromatische Struktur enthaltende, als auch ethylenisch ungesättigte (Doppel- oder Dreifachbindungen enthaltende) Kohlenwasserstoffreste tragen, wobei das Siliconpolymere (A) durch eine Additionsreaktion mit einem Siliciumhydrid in Gegenwart eines Platinkatalysators vernetzbar ist; und
   (ii) leitfähige Teilchen (B), bestehend aus 12,5 bis 50 Volumenprozent, bezogen auf das Silicongemisch, Silberteilchen oder Teilchen mit einer äußeren Oberfläche aus Silber; und
   (iii) gegebenenfalls Ruß (C).

2. Silicongemisch nach Anspruch 1, wobei mehr als 5 Prozent der Siliciumatome des Polymeren (A) Phenylreste tragen oder mehr als 5 Prozent der Siliciumatome des Polymeren Vinylreste tragen oder mehr als 5 Prozent der Siliciumatome des Polymeren sowohl Phenylreste, als auch Vinylreste tragen, wobei das Siliconpolymere (A) durch eine Additionsreaktion mit einem Siliciumhydrid in Gegenwart eines Platinkatalysators vernetzbar ist.

3. Silicongemisch nach Anspruch 1 oder 2, das frei von Ruß ist.

4. Silicongemisch nach jedem der Ansprüche 1 bis 3, in dem das Siliconpolymere (A) ein Polydiorganosiloxan ist und ein Vernetzungssystem (C) für das Polydiorganosiloxan (A), das ein Organohydrogensiloxan (E) mit mindestens 2 SiH enthaltenden Einheiten pro Molekül enthält, sowie ein Platin enthaltender Katalysator (F) vorhanden ist, wobei das Gemisch bei Raumtemperatur vernetzbar ist.

5. Silicongemisch nach jedem der Ansprüche 1 bis 4, in dem auch ein Haftzusatzmittel (D) vorhanden ist.

6. Silicongemisch nach jedem der Ansprüche 1 bis 5, in dem das Siliconpolymere die allgemeine Formel

   $(Me_2ViSiO_{1/2})_{0,42}(Me_2SiO)_{103}(MePhSiO)_{45}$

   hat, in der Ph für Phenyl, Vi für Vinyl und Me für Methyl steht.

7. Verfahren zur Verbesserung der elektrischen spezifischen Leitfähigkeit eines Silicongemisches, das (A) ein Siliconpolymeres und (B) leitfähige Teilchen enthält, dadurch gekennzeichnet, daß man als Siliconpolymeres (A) ein Siliconpolymeres verwendet, in dem (a) mehr als 5 Prozent seiner Siliciumatome eine aromatische Struktur enthaltende Reste oder ethylenisch ungesättigte (Doppel- oder Dreifachbindungen enthaltende) Kohlenwasserstoffreste oder sowohl eine aromatische Struktur enthaltende, als auch ethylenisch ungesättigte (Doppel- oder Dreifachbindungen enthaltende) Kohlenwasserstoffreste tragen, und das (b) durch eine Additionsreaktion mit einem Siliciumhydrid in Gegenwart eines Platinkatalysators vernetzbar ist; und als leitfähige Teilchen (B) 12,5 bis 50 Volumenprozent, bezogen auf das Silicongemisch, Silberteilchen oder Teilchen mit einer äußeren Oberfläche aus Silber verwendet; und gegebenenfalls Ruß in dem Silicongemisch verwendet.

**Revendications**

1. Composition à base de silicone, durcissable et électroconductrice, ayant une résistivité électrique inférieure à $1 \times 10^{-2}$ ohm-cm, ladite résistivité électrique étant stable vis-à-vis du vieillissement thermique, et ladite composition comprenant :

   (i) un polymère de silicone (A) ayant plus de 5% de ses atomes de silicium avec des radicaux contenant des fragments aromatiques attachés à ceux-ci, ou avec des radicaux hydrocarbonés éthyléniquement insaturés (liaisons doubles ou triples) attachés à ceux-ci, ou avec à la fois des radicaux contenant des fragments aromatiques et des radicaux hydrocarbonés éthyléniquement insaturés (liaisons doubles ou triples) attachés à ceux-ci, ledit polymère de silicone (A) pouvant durcir grâce à une réaction d'addition avec un hydrure de silicium en présence d'un catalyseur du type platine ;

   (ii) des particules conductrices (B) constituées de 12,5 à 50% en volume, sur la base de ladite composition, de particules d'argent ou de particules ayant une surface extérieure en argent ; et

   (iii) éventuellement du noir de carbone (C).

2. Composition à base de silicone selon la revendication 1, dans laquelle ledit polymère de silicone (A) a plus de 5% de ses atomes de silicium avec des radicaux phényles attachés à ceux-ci, ou a plus de 5% en moles de ses atomes de silicium avec des radicaux vinyles attachés à ceux-ci, ou a plus de 5% en moles de ses atomes de silicium avec à la fois des radicaux phényles et des radicaux vinyles attachés à ceux-ci, ledit polymère (A) pouvant durcir grâce à une réaction d'addition avec un hydrure de silicium en présence d'un catalyseur du type platine.

3. Composition à base de silicone selon la revendication 1 ou 2, ne contenant pas de noir de carbone.

4. Composition à base de silicone selon l'une quelconque des revendications 1 à 3, dans laquelle ledit polymère de silicone (A) est un polydiorganosiloxane, et ladite composition contient aussi un système de durcissement (C) pour ledit polydiorganosiloxane (A), comprenant un organohydrogénosiloxane (E) ayant au moins deux unités contenant des groupes SiH par molécule, et un catalyseur (F) contenant du platine, ladite composition pouvant durcir à la température ambiante.

5. Composition à base de silicone selon l'une quelconque des revendications 1 à 4, contenant aussi un additif (D) servant de promoteur d'adhérence.

6. Composition à base de silicone selon l'une quelconque des revendications 1 à 5, dans laquelle ledit polymère de silicone a la formule générique :
   $(Me_2 ViSiO_{1/2})_{0,42}(Me_2 SiO)_{103}(MePhSiO)_{45}$, où Ph est phényle, Vi est vinyle et Me est méthyle.

7. Procédé pour améliorer la conductivité électrique d'une composition à base de silicone comprenant (A) un polymère de silicone et (B) des particules conductrices, caractérisé en ce qu'on utilise, comme polymère de silicone (A), un polymère de silicone qui (a) comporte plus de 5% de ses atomes de silicium avec des radicaux contenant des fragments aromatiques attachés à ceux-ci, ou avec des radicaux hydrocarbonés éthyléniquement insaturés (liaisons doubles ou triples) attachés à ceux-ci, ou avec à la fois des radicaux contenant des fragments aromatiques et des radicaux hydrocarbonés éthyléniquement insaturés (liaisons doubles ou triples) attachés à ceux-ci, et (b) peut durcir grâce à une réaction d'addition avec un hydrure de silicium en présence d'un catalyseur du type platine ; et, comme particules conductrices (B), de 12,5 à 50% en volume, sur la base de ladite composition, de particules d'argent ou de particules ayant une surface extérieure en argent ; et en ce qu'on utilise éventuellement du noir de carbone dans ladite composition à base de silicone.